# EUROPEAN PATENT SPECIFICATION

(11) **EP 2 806 126 B1**
(45) Date of publication and mention of the grant of the patent: **22.11.2017**
(21) Application number: 14169189.9
(22) Date of filing: 21.05.2014
(51) Int. Cl.: F02D 41/02, F01N 3/08, F01N 11/00, F02D 41/22, F02D 41/14

(54) **Exhaust gas purification apparatus for internal combustion engine**
Abgasreinigungsvorrichtung für einen Verbrennungsmotor
Appareil de purification de gaz d'échappement pour moteur à combustion interne

(30) Priority: 21.05.2013 JP 2013107054
(43) Date of publication of application: 26.11.2014
(73) Proprietor: Toyota Jidosha Kabushiki Kaisha, Toyota-shi, Aichi-ken 471-8571 (JP)
(72) Inventor: Hagimoto, Taiga, TOYOTA-SHI, AICHI-KEN, 471-8571 (JP); Kogo, Tomoyuki, TOYOTA-SHI, AICHI-KEN, 471-8571 (JP); Matsumoto, Arifumi, TOYOTA-SHI, AICHI-KEN, 471-8571 (JP); Furui, Kenji, TOYOTA-SHI, AICHI-KEN, 471-8571 (JP); Uozumi, Akifumi, TOYOTA-SHI, AICHI-KEN, 471-8571 (JP)
(74) Representative: Intès, Didier Gérard André

(56) References cited:
- EP-A1- 2 151 563
- EP-A1- 2 278 144
- EP-A1- 2 573 371
- JP-A- 2009 041 454
- US-A1- 2007 251 224

## Description

### TECHNICAL FIELD

The present invention relates to an exhaust gas purification apparatus for an internal combustion engine provided with an oxidation catalyst.

### BACKGROUND ART

An oxidation catalyst provided in an exhaust gas purification apparatus of an internal combustion engine purifies exhaust gas by oxidizing hydrocarbons (HC), carbon monoxide (CO) and the like in the exhaust gas. It is known that when an oxidation catalyst which uses zeolite, alumina or the like is in a predetermined temperature range that is lower than the activation temperature of the catalyst, then the catalyst adsorbs nitrogen oxides (NOx) in the exhaust gas, and uses HC in the exhaust gas as a reducing agent to secondarily perform reduction of NOx (see, for example, Patent Documents 1 and 2).

In an exhaust gas purification apparatus provided with a selective catalytic reduction catalyst (SCR catalyst) which removes NOx in the exhaust gas, a NOx sensor which detects the NOx concentration may be provided at the upstream side of the SCR catalyst. In an exhaust gas purification apparatus of this kind, it is important that the NOx sensor operates properly, and therefore a fault diagnosis of the NOx sensor is carried out during operation of the internal combustion engine (see, for example, Patent Documents 3, 4, 5 and 6). In this fault diagnosis, the detected value of the NOx concentration detected by the NOx sensor and an estimated value of the NOx concentration at the position of the NOx sensor are compared. For this estimated value, an estimated value of the NOx concentration in the exhaust gas emitted from the internal combustion engine is generally used. Then, it is determined that the NOx sensor is suffering a fault if the difference between the detected value of the NOx sensor and the estimated value of the NOx concentration exceeds a predetermined threshold value for determining a fault. EP 2 151 563 A1 teaches determining a NOx quantity upstream of a NOx trap based on a NOx quantity downstream of the NOx trap, temperature and flow rate of exhaust gas.

### CITATION LIST

Patent Document 1: Japanese Patent Application Publication No. H8-261052
Patent Document 2: Japanese Patent Application Publication No. 2009-41454
Patent Document 3: Japanese Patent Application Publication No. 2010-265781
Patent Document 4: EP 2 573 371 A1
Patent Document 5: US 2007/0251224 A1
Patent Document 6: EP 2 278 144 A1

As described above, in a fault diagnosis of a NOx sensor, it is determined that a NOx sensor is suffering a fault if the difference between the detected value of the NOx sensor and the estimated value of the NOx concentration in the exhaust gas emitted from the internal combustion engine exceeds a predetermined threshold value for determining a fault (called "fault determination threshold value" below). Here, if the NOx sensor is disposed at the upstream side of the SCR catalyst and at the downstream side of the oxidation catalyst, the NOx concentration in the exhaust gas emitted from the internal combustion engine may change due to the effects of the oxidation catalyst before the exhaust gas reaches the NOx sensor. If the NOx concentration has changed excessively due to the effects of the oxidation catalyst, then the detected value of the NOx concentration detected by the NOx sensor may differ excessively from the estimated value of the NOx concentration in the exhaust gas emitted from the internal combustion engine. If the fault diagnosis of the NOx sensor is carried out under such circumstances, even if the NOx sensor is functioning properly, there is a possibility of an erroneous determination of a sensor fault, due to the fact that the difference between the detected value and the estimated value of the NOx concentration exceeds the fault determination threshold value.

The present invention was devised in view of these circumstances, an object thereof being to provide an exhaust gas purification apparatus for an internal combustion engine provided with an oxidation catalyst, wherein a change in the NOx concentration in the exhaust gas due to the effects of the oxidation catalyst is estimated, and furthermore, if the exhaust gas purification apparatus is further equipped with a NOx sensor provided at the downstream side of the oxidation catalyst, the fault diagnosis of the NOx sensor is carried out with high accuracy.

In order to solve the problem described above, the exhaust gas purification apparatus for an internal combustion engine relating to the present invention includes: an oxidation catalyst provided in an exhaust gas passage of the internal combustion engine and having an oxidation capability, the oxidation catalyst exhibiting an action of adsorbing NOx in an exhaust gas flowing therein and an action of reducing NOx in the exhaust gas by using a hydrocarbon in the exhaust gas flowing therein as a reducing agent, when a temperature of the oxidation catalyst is in a predetermined temperature range; and an estimation unit which estimates an adsorption rate, which is an amount of NOx adsorbed to the oxidation catalyst per unit time, and a desorption rate, which is an amount of NOx desorbed from the oxidation catalyst per unit time, on the basis of a hydrocarbon flow rate in the exhaust gas flowing into the oxidation catalyst and the temperature of the oxidation catalyst, when the temperature of the oxidation catalyst is in the predetermined temperature range.

An oxidation catalyst, for which zeolite, alumina, or the like is used, exhibits an action of adsorbing nitrogen oxides (NOx) in the exhaust gas, when the temperature of the catalyst (bed temperature) is in the predetermined temperature range which is lower than a temperature range in which the oxidation catalyst exhibits a sufficient oxidation capability. Furthermore, if the bed temperature is in this predetermined temperature range, then the oxidation catalyst also exhibits an action of reducing the NOx in the exhaust gas by using the hydrocarbon (HC) flowing into the catalyst via the exhaust gas as a reducing agent.

Here, the inventors of this application discovered that, if the bed temperature of the oxidation catalyst is in the predetermined temperature range described above, then adsorption of the NOx in the oxidation catalyst is inhibited and desorption of the NOx adsorbed in the oxidation catalyst is facilitated by the HC flowing into the oxidation catalyst via the exhaust gas. More specifically, the inventors discovered that there is a correlation between the HC flow rate in the exhaust gas flowing into the oxidation catalyst and the adsorption rate, which is the amount of NOx adsorbed in the oxidation catalyst per unit time, and that there is a correlation between the HC flow rate and the desorption rate, which is the amount of NOx desorbed from the oxidation catalyst per unit time. Furthermore, the inventors also discovered that if the bed temperature of the oxidation catalyst is in the predetermined temperature range described above, then there is a correlation between the bed temperature and the adsorption rate and a correlation between the bed temperature and the desorption rate.

Therefore, according to the present invention, an estimation unit that estimates the adsorption rate and the desorption rate on the basis of the HC flow rate in the exhaust gas flowing into the oxidation catalyst and the temperature of the oxidation catalyst, when the temperature of the oxidation catalyst is in the predetermined temperature range described above, is provided. Thus, it becomes possible to estimate an amount of the NOx that adsorbs to the oxidation catalyst and an amount of the NOx that desorbs from the oxidation catalyst. Accordingly, in an exhaust gas purification apparatus for an internal combustion engine which is provided with an oxidation catalyst, it becomes possible to estimate the change in the NOx concentration in the exhaust gas flowing out from the oxidation catalyst due to the effects of the oxidation catalyst.

In the correlations between the HC flow rate and the adsorption rate, and between the HC flow rate and the desorption rate, the adsorption rate becomes lower and the desorption rate becomes higher as the HC flow rate becomes higher. Therefore, in the present invention, in cases where the temperature of the oxidation catalyst is in the predetermined temperature range, when the HC flow rate is high, the estimation unit described above may make a lower estimate of the adsorption rate and make a higher estimate of the desorption rate compared to when the HC flow rate is low.

Furthermore, in the correlations between the temperature of the oxidation catalyst and the adsorption rate, and between the temperature of the oxidation catalyst and the desorption rate, the adsorption rate becomes lower and the desorption rate becomes higher as the temperature becomes lower. Therefore, in the present invention, in cases where the temperature of the oxidation catalyst is in the predetermined temperature range, when the temperature of the oxidation catalyst is low, the estimation unit described above may make a lower estimate of the adsorption rate and make a higher estimate of the desorption rate compared to when the temperature of the oxidation catalyst is high.

Furthermore, the exhaust gas purification apparatus for an internal combustion engine relating to the present invention further includes : a NOx sensor which is provided at a downstream side of the oxidation catalyst and detects a NOx concentration in the exhaust gas; and a fault determination unit which executes a fault determination of the NOx sensor on the basis of a comparison between a detected value of the NOx concentration detected by the NOx sensor and an estimated value of the NOx concentration in the exhaust gas at the position of the NOx sensor, wherein, when the temperature of the oxidation catalyst is in the predetermined temperature range and when a net desorption amount of the NOx obtained from the adsorption rate and the desorption rate is equal to or greater than a predetermined amount, the fault determination unit halts the fault determination of the NOx sensor. Here, the net desorption amount of the NOx is a value obtained by subtracting the amount of NOx adsorbed to the oxidation catalyst during a predetermined time period, from the amount of NOx desorbed from the oxidation catalyst during the same time period. The greater the net desorption amount of the NOx desorbed from the oxidation catalyst, the greater the change of the NOx concentration in the exhaust gas passing through the oxidation catalyst, and therefore the possibility of an erroneous determination being produced by the fault determination unit may increase. Therefore, according to the present invention, the fault determination unit halts the fault determination of the NOx sensor, if there is a high possibility of producing an erroneous determination due to the net desorption amount of the NOx being equal to or greater than the predetermined amount. Accordingly, if there is a risk that the fault determination unit might make an erroneous determination, an execution of the fault determination can be avoided, and thus it becomes possible to execute the fault diagnosis of the NOx sensor more accurately.

Furthermore, the exhaust gas purification apparatus for an internal combustion engine relating to the present invention further includes : a NOx sensor which is provided at a downstream side of the oxidation catalyst and detects a NOx concentration in the exhaust gas; and a fault determination unit which executes a fault determination of the NOx sensor on the basis of a comparison between a detected value of the NOx concentration detected by the NOx sensor and an estimated value of the NOx concentration in the exhaust gas at the position of the NOx sensor, wherein, when the temperature of the oxidation catalyst is in the predetermined temperature range, the fault determination unit uses a corrected estimated value, which is the estimated value corrected on the basis of the adsorption rate and the desorption rate, instead of the estimated value to execute the fault determination of the NOx sensor. Consequently, the change due to the effects of the oxidation catalyst is reflected in the estimated value of the NOx concentration that is to be compared with the detected value of the NOx sensor. Therefore, an execution of the fault determination by the fault determination unit can be avoided, and thus it becomes possible to execute the fault diagnosis of the NOx sensor more accurately.

Furthermore, the exhaust gas purification apparatus for an internal combustion engine relating to the present invention further includes : a NOx sensor which is provided at a downstream side of the oxidation catalyst and detects a NOx concentration in the exhaust gas; and a fault determination unit which determines that the NOx sensor is suffering a fault when a difference between a detected value of the NOx concentration detected by the NOx sensor and an estimated value of the NOx concentration in the exhaust gas at the position of the NOx sensor is equal to or greater than a predetermined threshold value, wherein, when the temperature of the oxidation catalyst is in the predetermined temperature range, the fault determination unit corrects the threshold value on the basis of the adsorption rate and the desorption rate. Consequently, the change in the NOx concentration due to the effects of the oxidation catalyst is reflected in the predetermined threshold value for the fault determination. Therefore, an execution of the fault determination by the fault determination unit can be avoided, and thus it becomes possible to execute the fault diagnosis of the NOx sensor more accurately.

Furthermore, the exhaust gas purification apparatus for an internal combustion engine relating to the present invention may include: an oxidation catalyst provided in an exhaust gas passage of the internal combustion engine and having an oxidation capability, the oxidation catalyst exhibiting an action of adsorbing NOx in an exhaust gas flowing therein and an action of reducing NOx in the exhaust gas by using determination of the NOx sensor. Consequently, the change due to the effects of the oxidation catalyst is reflected in the estimated value of the NOx concentration that is to be compared with the detected value of the NOx sensor. Therefore, an execution of the fault determination by the fault determination unit can be avoided, and thus it becomes possible to execute the fault diagnosis of the NOx sensor more accurately.

Furthermore, the exhaust gas purification apparatus for an internal combustion engine relating to the present invention may further include: a NOx sensor which is provided at a downstream side of the oxidation catalyst and detects a NOx concentration in the exhaust gas; and a fault determination unit which determines that the NOx sensor is suffering a fault when a difference between a detected value of the NOx concentration detected by the NOx sensor and an estimated value of the NOx concentration in the exhaust gas at the position of the NOx sensor is equal to or greater than a predetermined threshold value, wherein, when the temperature of the oxidation catalyst is in the predetermined temperature range, the fault determination unit corrects the threshold value on the basis of the adsorption rate and the desorption rate. Consequently, the change in the NOx concentration due to the effects of the oxidation catalyst is reflected in the predetermined threshold value for the fault determination. Therefore, an execution of the fault determination by the fault determination unit can be avoided, and thus it becomes possible to execute the fault diagnosis of the NOx sensor more accurately.

According to the present invention, in an exhaust gas purification apparatus for an internal combustion engine provided with an oxidation catalyst, it is possible to estimate the change in the NOx concentration in the exhaust gas due to the effects of the oxidation catalyst. Furthermore, if the exhaust gas purification apparatus is further provided with a NOx sensor provided at the downstream side of the oxidation catalyst, then it is possible to carry out the fault diagnosis of the NOx sensor with higher accuracy.

### BRIEF DESCRIPTION OF THE DRAWINGS

FIG. 1 is a diagram showing a schematic view of an exhaust gas purification apparatus for an internal combustion engine relating to a first embodiment;
FIG. 2 is a time chart showing the transitions of the NOx concentrations at the upstream side and the downstream side of the oxidation catalyst relating to the first embodiment;
FIG. 3 is a flowchart showing a flow of NOx sensor fault diagnosis relating to the first embodiment;
FIG. 4 is a diagram showing a relationship between the maximum adsorption amount of NOx and the bed temperature of the oxidation catalyst relating to the first embodiment;
FIG. 5 is a flowchart showing a flow of NOx sensor fault diagnosis relating to a second embodiment;
FIG. 6 is a flowchart showing a flow of NOx sensor fault diagnosis relating to a third embodiment; and

### DESCRIPTION OF EMBODIMENTS

Below, detailed embodiments of the invention are described with reference to the drawings. The dimensions, materials, shapes and relative arrangements, etc. of the constituent components described in these embodiments are not limited in particular, and the technical scope of the invention is not intended to be limited to the embodiments.

### [First embodiment]

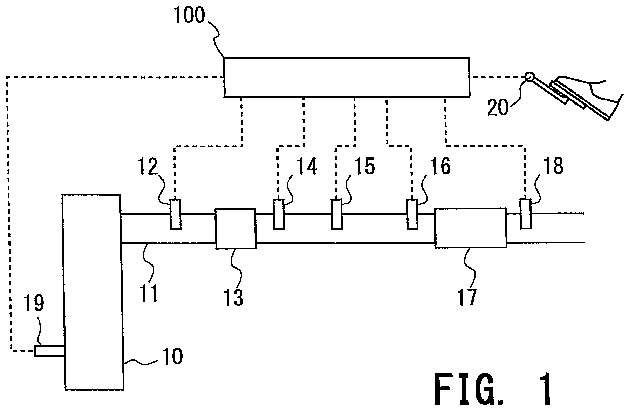

Firstly, the configuration of the exhaust gas purification apparatus for an internal combustion engine relating to a first embodiment of the present invention will be described. FIG. 1 is a diagram showing a schematic configuration of an internal combustion engine and an exhaust gas purification apparatus for the same to which the invention is applied. The internal combustion engine 10 shown in FIG. 1 is a compression ignition type of internal combustion engine (diesel engine) for an automobile having a plurality of cylinders.

An exhaust gas passage 11 for passing emitted exhaust gas is connected to the internal combustion engine 10. A fuel addition valve 12, an oxidation catalyst 13, an exhaust gas temperature sensor 14, a first NOx sensor 15, a urea addition valve 16, a selective catalytic reduction catalyst (SCR catalyst) 17 and a second NOx sensor 18 are arranged in the exhaust gas passage 11, in the stated order from the upstream side. Furthermore, an ECU 100, which is an electronic control unit for controlling the internal combustion engine 10 is also attached to the internal combustion engine 10. The peripheral equipment, such as the fuel addition valve 12 described above, is electrically connected to the ECU 100, and is controlled electrically by the ECU 100. Furthermore, in addition to the sensors such as the exhaust gas temperature sensor 14 described above, a crank position sensor 19 which detects the rotational speed of the engine, and an accelerator position sensor 20 which detects the position of the accelerator pedal depressed by the driver, are also connected to the ECU 100 by electrical wiring, and the output signals from these are input to the ECU 100. The ECU 100 estimates the state of operation of the internal combustion engine 10 on the basis of the output values from the crank position sensor 19, the accelerator position sensor 20 and the like, and estimates the NOx concentration in the exhaust gas emitted from the internal combustion engine 10, from the estimated state of operation.

The fuel addition valve 12 supplies fuel to the oxidation catalyst 13 by injecting fuel into the exhaust gas flowing inside the exhaust gas passage 11 on the basis of an instruction from the ECU 100, when, for instance, the exhaust gas temperature is to be raised. Instead of the fuel addition valve 12, it is also possible to supply fuel to the oxidation catalyst 13 by after-injection or post-injection by fuel injection valvea provided in the internal combustion engine 10.

The oxidation catalyst 13 is provided with zeolite or alumina as a catalyst carrier, and oxidizes unburned fuel, carbon monoxide or the like, which is emitted from the internal combustion engine 10, thereby suppressing the discharge thereof into the atmosphere. Furthermore, when fuel is supplied by the fuel addition valve 12, the oxidation catalyst 13 oxidizes the fuel and eventually raises the exhaust gas temperature. When the catalyst temperature (bed temperature) is in a predetermined temperature range, the oxidation catalyst 13 can also selectively reduce the NOx emitted from the internal combustion engine 10 by using a hydrocarbon as a reducing agent and thereby removes the NOx (details to be described below). Furthermore, the exhaust gas temperature sensor 14 detects the temperature of the exhaust gas flowing out from the oxidation catalyst 13.

The urea addition valve 16 injects urea solution into the exhaust gas flowing inside the exhaust gas passage 11, on the basis of an instruction from the ECU 100, and supplies urea, which is a precursor of ammonia, to an SCR catalyst 17. The SCR catalyst 17 uses the ammonia generated from the urea as a reducing agent to remove the NOx in the exhaust gas. Here, the ECU 100 controls the amount of urea solution added by the urea addition valve 16 on the basis of the NOx concentrations in the exhaust gas detected by the first NOx sensor 15, which is arranged at the upstream side of the SCR catalyst 17, and the second NOx sensor 18, which is arranged at the downstream side thereof, in such a manner that effective reduction of the NOx occurs in the SCR catalyst 17.

In the exhaust gas purification apparatus for an internal combustion engine 10 having a configuration of this kind, it is important that both NOx sensors operate properly, in order that NOx reduction is performed effectively in the SCR catalyst 17. Thus, the ECU 100 executes a fault diagnosis of both NOx sensors either periodically or when necessary. Here, in the fault diagnosis of the first NOx sensor 15 which is arranged at the upstream side of the SCR catalyst 17, the detected value for the NOx concentration which is detected by the first NOx sensor 15 and the estimated value for the NOx concentration in the exhaust gas which is emitted from the internal combustion engine 10 are compared. This estimated value is the estimated value of the NOx concentration in the exhaust gas at the position of the first NOx sensor 15, and this value is estimated by the ECU 100 in accordance with the state of operation of the internal combustion engine 10. If the difference between the two exceeds a threshold value for determining a fault (called the "fault determination threshold value" below), then it is determined that the first NOx sensor 15 is suffering a fault. Here, this fault determination threshold value is set by taking account of the change in the NOx concentration which may occur before the exhaust gas emitted from the internal combustion engine 10 reaches the first NOx sensor 15. However, if the NOx concentration in the exhaust gas emitted from the internal combustion engine 10 changes excessively due to the effects of the oxidation catalyst 13 which is arranged at the upstream side of the first NOx sensor 15, then even if the first NOx sensor 15 is operating properly, there is a possibility that a sensor fault may be determined erroneously as a result of the fact that the difference between the estimated value of the NOx concentration and the actual detected value exceeds the fault determination threshold value. Therefore, in the present embodiment, a change in the NOx concentration in the exhaust gas due to the effects of the oxidation catalyst 13 is estimated before carrying out the fault diagnosis of the first NOx sensor 15. If it is predicted that there might be an excessive change in the NOx concentration in the exhaust gas, then the fault determination of the first NOx sensor 15 is halted. Below, the method of estimating the change in the NOx concentration in the exhaust gas due to the effects of the oxidation catalyst 13 will be described.

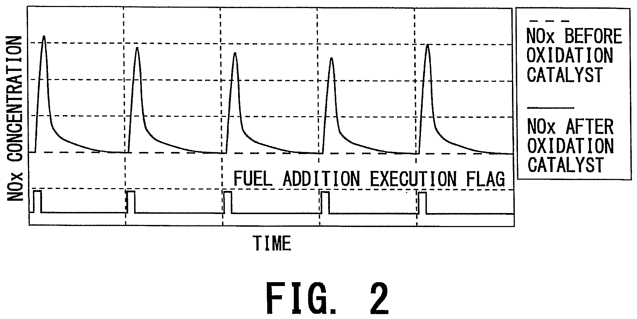

The oxidation catalyst 13 exhibits an action of adsorbing NOx in the exhaust gas flowing into the catalyst, and an action of reducing the NOx in the exhaust gas by using the hydrocarbon (HC) in the exhaust gas flowing into the catalyst as a reducing agent, if the bed temperature is in a predetermined temperature range. This predetermined temperature range (called the "reduction temperature range" below) may be found by experimentation, or the like, but in general, is a temperature range below the temperature range in which the oxidation catalyst 13 exhibits a sufficient oxidation capability. In this respect, the inventors of the this application discovered that, if the bed temperature of the oxidation catalyst 13 is in the reduction temperature range and when the HC flows into the oxidation catalyst 13 via the exhaust gas, then due to the action of the HC flowing in, adsorption of the NOx to the oxidation catalyst 13 is inhibited and desorption of the NOx which has been adsorbed to the oxidation catalyst 13 is facilitated. Below, this action of the HC is described with reference to FIG. 2.

FIG. 2 is a time chart showing the transition of the NOx concentrations in the exhaust gas at the upstream side and the downstream side of the oxidation catalyst 13. The bed temperature of the oxidation catalyst 13 is in the reduction temperature range described above. In FIG. 2, the dotted line indicates the transition of the NOx concentration at the upstream side of the oxidation catalyst 13, in other words, the NOx concentration in the exhaust gas flowing into the oxidation catalyst 13 ("NOx before oxidation catalyst" in FIG. 2), and the solid line indicates the transition of the NOx concentration at the downstream side of the oxidation catalyst 13, in other words, the NOx concentration in the exhaust gas flowing out from the oxidation catalyst 13 ("NOx after oxidation catalyst" in FIG. 2). The "fuel addition execution flag" shown in FIG. 2 shows the execution timing of fuel addition by the fuel addition valve 12.

As shown in FIG. 2, even if the NOx concentration in the exhaust gas flowing into the oxidation catalyst 13 transits almost uniformly, the NOx concentration in the exhaust gas flowing out from the oxidation catalyst 13 increases sharply in accordance with the execution timing of the fuel addition by the fuel addition valve 12. This means that the NOx adsorbed to the oxidation catalyst 13 is desorbed due to the supply of fuel, namely HC, to the oxidation catalyst 13 via the exhaust gas.

This action of the HC is described as follows. The zeolite used in the oxidation catalyst 13 can incorporate and adsorb the NOx and HC molecules into the fine pores therein. Here, the HC molecules contained in the fuel have larger diameters than those of the NOx molecules and are close to the diameters of the fine pores in the zeolite, and therefore the adsorptivity of the HC molecules is stronger than that of the NOx molecules. Therefore, when the HC flows into the oxidation catalyst 13, the NOx molecules which have been adsorbed to the fine pores in the zeolite are pushed out and desorbed by the HC molecules which have stronger adsorptivity. Consequently, when the HC molecules flow in, the amount of NOx desorbed from the oxidation catalyst 13 increases. Furthermore, when the HC flows into the oxidation catalyst 13, the HC molecules are adsorbed preferentially into the empty fine pores in the zeolite, and therefore the number of NOx molecules adsorbed into the oxidation catalyst 13 decreases. Consequently, when the HC molecules flow in, the amount of NOx adsorbed to the oxidation catalyst 13 decreases.

Furthermore, the action of desorbing NOx by the HC is described as follows. If the bed temperature of the oxidation catalyst 13 is in the reduction temperature range described above, then the alumina used in the oxidation catalyst 13 can adsorb NOx molecules on the surface thereof, and can reduce the adsorbed NOx molecules by using the HC as a reducing agent. But depending on the bed temperature of the oxidation catalyst 13, the activity of the alumina may be low, and thus the NOx reduction reaction using the HC may not progress adequately. In this case, due to the inadequate reduction reaction, further NOx (for example, NO₂ or NO) is liable to be generated from the adsorbed NOx (for example, NO₃) rather than nitrogen (N₂). Here, these other NOx are liable to desorb from the alumina due to the weak absorptivity. Consequently, if the HC flows into the oxidation catalyst 13, the adsorbed NOx may be desorbed as inadequately reduced NOx, and hence a phenomenon of increase in the amount of NOx desorbed from the oxidation catalyst 13 occurs. The more the bed temperature of the oxidation catalyst 13 drops within the reduction temperature range, the more the activity of the oxidation catalyst 13 decreases, and thus the progression of the reduction reaction of the NOx by the HC would be insufficient. This would lead to an increase in the amount of NOx which is desorbed in the form of NOx. Furthermore, if the bed temperature of the oxidation catalyst 13 becomes low, the total amount of NOx desorbed from the oxidation catalyst 13 would be reduced due to the decline in the activity of the oxidation catalyst 13, and thus the amount of newly adsorbed NOx to the oxidation catalyst 13 would also be reduced.

As described above, if the HC flows into the oxidation catalyst 13 while the bed temperature is in the reduction temperature range then adsorption of the NOx to the oxidation catalyst 13 is inhibited and desorption of the NOx adsorbed to the oxidation catalyst 13 is facilitated. This action becomes more liable to occur, as the flow rate of HC flowing into the oxidation catalyst 13 increases and the temperature of the oxidation catalyst 13 decreases. In other words, if the amount of NOx adsorbed per unit time into the oxidation catalyst 13 is taken as the adsorption rate and the amount of NOx desorbed per unit time from the oxidation catalyst 13 is taken as the desorption rate, then the higher the HC flow rate is, the lower the adsorption rate becomes and the higher the desorption rate becomes. Furthermore, if the bed temperature of the oxidation catalyst 13 is in the reduction temperature range described above, then the lower the bed temperature is, the lower the absorption rate becomes and the higher the desorption rate becomes. Therefore, on the basis of these correlations, the adsorption rate of the NOx which is adsorbed to the oxidation catalyst 13 and the desorption rate of the NOx which is desorbed from the oxidation catalyst 13 can be estimated from the HC flow rate in the exhaust gas flowing into the oxidation catalyst 13 and the bed temperature of the oxidation catalyst 13.

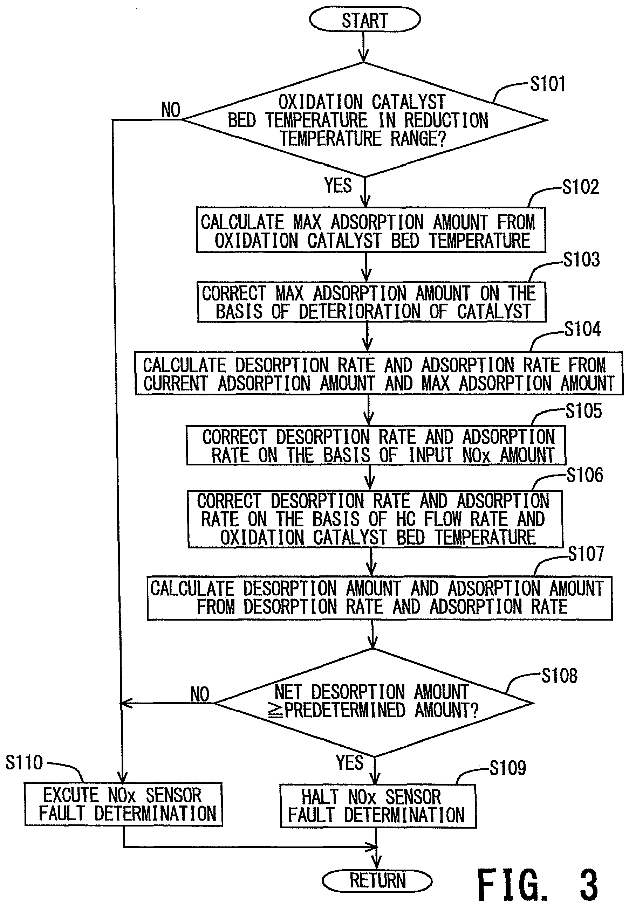

Next, the flow of NOx sensor fault diagnosis relating to the present embodiment is described with reference to the drawings. FIG. 3 is a flowchart showing a flow of the NOx sensor fault diagnosis relating to the present embodiment. This flow is carried out at predetermined time intervals or when necessary, by the ECU 100.

In step S101, the ECU 100 determines whether or not the bed temperature of the oxidation catalyst 13 is in the reduction temperature range described above. The bed temperature of the oxidation catalyst 13 is estimated by using the exhaust gas temperature detected by the exhaust gas temperature sensor 14. If a negative judgment is made in this step, then this means that the oxidation catalyst 13 is, in general, not exhibiting an action of adsorbing the NOx in the exhaust gas or an action of reducing the NOx in the exhaust gas by using the HC in the exhaust gas as a reducing agent. In other words, in this case, even if exhaust gas passes inside the oxidation catalyst 13, it can be considered that there will not be an excessive change in the NOx concentration in the exhaust gas, and therefore there is a low possibility of an erroneous determination being made when a fault diagnosis of the first NOx sensor 15 is carried out. Therefore, the ECU 100 advances to step S110 and carries out a fault determination of the first NOx sensor 15. Here, as described above, the ECU 100 compares the NOx concentration detected by the first NOx sensor 15 and the estimated value of the NOx concentration in the exhaust gas emitted from the internal combustion engine 10, and determines that the first NOx sensor 15 is suffering a fault if the difference between these values exceeds the fault determination threshold value. The ECU 100 which carries out the fault determination of the first NOx sensor 15 in step S110 corresponds to the fault determination unit of the present invention.

On the other hand, if an affirmative judgment is made in step S101, then there is a possibility that the NOx concentration in the exhaust gas passing through the oxidation catalyst 13 might change excessively due to the effects of the oxidation catalyst 13. Therefore, the ECU 100 advances to step S102 in order to estimate the change in the NOx concentration.

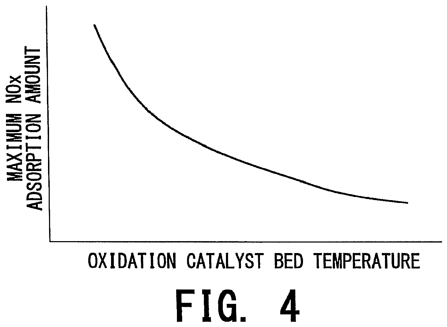

In step S102, the ECU 100 calculates the maximum adsorption amount, which is the maximum amount of NOx that can be adsorbed by the oxidation catalyst 13, from the bed temperature of the oxidation catalyst 13. Here, there is a correlation such as that in the graph shown in FIG. 4 between this maximum adsorption amount and the bed temperature of the oxidation catalyst 13. Therefore, by storing the graph shown in FIG. 4 in advance as a map or function in the ECU 100, it is possible to obtain the maximum adsorption amount of the NOx on the basis of the bed temperature of the oxidation catalyst 13.

In step S103, the ECU 100 corrects the maximum adsorption amount obtained in the previous step, on the basis of the degree of catalyst deterioration. Generally, as deterioration of the oxidation catalyst 13 progresses, the catalyst tends to adsorb the NOx molecules less. Therefore, for example, the obtained maximum adsorption amount is corrected on the basis of the degree of deterioration of the oxidation catalyst 13 which is estimated from the travel distance of the vehicle in which the internal combustion engine 10 is mounted or the temperature history of the oxidation catalyst 13.

In step S104, the ECU 100 calculates the NOx desorption rate and adsorption rate from the NOx amount adsorbed in the oxidation catalyst 13 at the time of the execution of this flow (hereinafter called the "current adsorption amount") and the maximum adsorption amount corrected in the previous step. Here, there is a correlation between the current adsorption rate and the desorption rate that the higher the current adsorption rate is, the higher the desorption rate becomes. Furthermore, there is also a correlation between the difference between the current adsorption amount and the maximum adsorption amount, and the adsorption rate, that the greater this difference is, the higher the adsorption rate becomes. Therefore, the ECU 100 calculates the NOx desorption rate and desorption rate, on the basis of these correlations.

In step S105, the ECU 100 corrects the desorption rate and the adsorption rate obtained in the previous step, on the basis of the NOx amount flowing into the oxidation catalyst 13 (called the "input NOx amount" below). The desorption rate and the adsorption rate are physical quantities which are determined in accordance with the difference between the NOx amount in the exhaust gas passing through the oxidation catalyst 13 and the NOx amount adsorbed to the fine pores of the oxidation catalyst 13. Therefore, the ECU 100 implements a correction such that the higher the input NOx amount is, the higher the absorption rate becomes and the lower the desorption rate becomes. The input NOx amount may be estimated from the estimated value of the NOx concentration in the exhaust gas emitted from the internal combustion engine 10.

In step S106, the ECU 100 corrects the NOx desorption rate and adsorption rate on the basis of the HC flow rate flowing into the oxidation catalyst 13 and the bed temperature of the oxidation catalyst 13. As described above, as the HC flow rate flowing into the oxidation catalyst 13 becomes higher and the bed temperature of the oxidation catalyst 13 becomes lower, the adsorption of NOx to the oxidation catalyst 13 is inhibited more and the desorption of NOx from the oxidation catalyst 13 is facilitated more. Therefore, the ECU 100 implements a correction such that the higher the HC flow rate is, the higher the desorption rate becomes and the lower the adsorption rate becomes. Furthermore, the ECU 100 implements a correction such that the lower the bed temperature of the oxidation catalyst 13 is, the higher the desorption rate becomes and the lower the adsorption rate becomes. Accordingly, it is possible to accurately estimate the change in the NOx concentration due to the effects of the oxidation catalyst 13 in the exhaust gas flowing out from the oxidation catalyst 13. Here, the ECU 100 which estimates the desorption rate and the adsorption rate of the NOx by those correction methods corresponds to the estimation unit of the present invention. The HC flow rate flowing into the oxidation catalyst 13 is estimated from the addition amount of the fuel from the fuel addition valve 12 and the state of operation of the internal combustion engine 10. Furthermore, for the specific correction amounts of the desorption rate and the adsorption rate, numerical values and functions determined in advance by experimentation, simulation, and the like, may be stored in the ECU 100.

In step S107, the ECU 100 calculates the desorption amount, which is the NOx amount desorbed from the oxidation catalyst 13, and the adsorption amount, which is the NOx amount adsorbed to the oxidation catalyst 13, on the basis of the desorption rate and the adsorption rate corrected in the previous step. This desorption amount and adsorption amount are determined, for example, by integrating the desorption rate and the adsorption rate over time for the interval time between the flows.

In step S108, the ECU 100 subtracts the adsorption amount from the desorption amount calculated in the previous step, to obtain the net desorption amount of NOx desorbed from the oxidation catalyst 13. The ECU 100 then determines whether or not the obtained net desorption amount is equal to or greater than a predetermined amount. This predetermined amount is an amount set in order to determine whether or not the NOx concentration in the exhaust gas has changed excessively due to the effects of the oxidation catalyst 13. If an affirmative judgment is made in this step, then this means that the NOx concentration in the exhaust gas has changed excessively due to the effects of the oxidation catalyst 13. In this case, even if the first NOx sensor 15 is operating properly, there is a possibility of erroneously determining a sensor fault due to the fact that the difference between the actual detected value of the NOx concentration and the estimated value of the NOx concentration exceeds the fault determination threshold value described above. Therefore, the ECU 100 advances to step S109 and halts the execution of the fault determination of the first NOx sensor 15 in the execution of this flow.

On the other hand, if a negative judgment is made in step S108, then this means that the NOx concentration in the exhaust gas has not changed excessively due to the effects of the oxidation catalyst 13. In this case, since there is little possibility of an erroneous determination being made in this fault determination, then the ECU 100 advances to step S110 and executes a fault determination of the first NOx sensor 15.

As described above, according to the present embodiment, the change in the NOx concentration in the exhaust gas due to the effects of the oxidation catalyst 13 is estimated, and if it is estimated that there has been an excessive change in the NOx concentration, then the fault determination of the first NOx sensor 15 is halted. Therefore, an execution of a fault determination by the ECU 100 is avoided, and thus it becomes possible to execute the fault diagnosis of the first NOx sensor 15 more accurately.

### [Second embodiment]

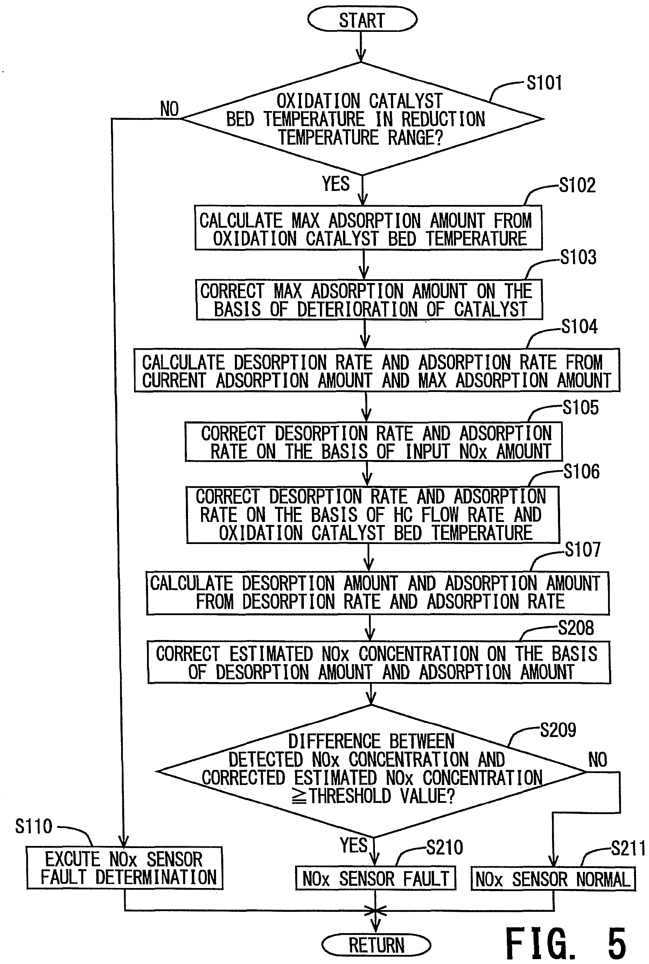

Next, a second embodiment of this invention will be described with reference to FIG. 5. FIG. 5 is a flowchart showing a flow of a fault diagnosis of the first NOx sensor 15 which is executed in the present embodiment. The present embodiment differs from the first embodiment described above in that, if it is predicted that the NOx concentration in the exhaust gas changes due to the effects of the oxidation catalyst 13, then the fault determination of the first NOx sensor 15 is carried out using an estimated value which reflects the change in the NOx concentration, instead of the estimated value of the NOx concentration. More specifically, as shown in FIG. 5, the flow according to the present embodiment differs from the flow of the first embodiment described above, in that step S208 to step S211 are executed after step S107. Therefore, the configuration which is similar to that of the first embodiment described above is not explained further below.

When the desorption amount of the NOx desorbed from the oxidation catalyst 13 and the adsorption amount of the NOx adsorbed in the oxidation catalyst 13 have been calculated in step S107, then in step S208, the ECU 100 corrects the estimated value of the NOx concentration in the exhaust gas emitted from the internal combustion engine 10 on the basis of the desorption amount and adsorption amount. In other words, since it is predicted that the NOx concentration in the exhaust gas flowing out from the oxidation catalyst 13 will change due to the effects of the oxidation catalyst 13, then the ECU 100 implements a correction such that the larger the calculated desorption amount is and the smaller the calculated adsorption amount is, the larger the estimated value becomes.

In step S209, the ECU 100 compares the detected value of the NOx concentration from the first NOx sensor 15 with the estimated value of the NOx concentration corrected in the previous step, and determines whether or not the difference between these two values is equal to or greater than a predetermined threshold value. This threshold value is a threshold value for determining a fault in the first NOx sensor 15, and may be the fault determination threshold value of the first embodiment. If an affirmative judgment is made in this step, then this means that even if the change in the NOx concentration in the exhaust gas due to the effects of the oxidation catalyst 13 is factored in, there is still an excessive difference between the estimated value of the NOx concentration and the actual detected value. Therefore, the ECU 100 advances to step S210, determines that the first NOx sensor 15 is suffering a fault and terminates this flow.

On the other hand, if a negative judgment is made in step S209, then this means that if the change in the NOx concentration in the exhaust gas due to the effects of the oxidation catalyst 13 is factored in, it can be determined that there is not an excessive difference between the estimated value of the NOx concentration and the actual detected value. Therefore, the ECU 100 advances to step S211, determines that the first NOx sensor 15 is normal (operating properly) and terminates this flow.

As described above, according to the present embodiment, the change due to the effects of the oxidation catalyst 13 is reflected in the estimated value of the NOx concentration that is to be compared with the detected value of the first NOx sensor 15. Therefore, an execution of a fault determination by the ECU 100 is avoided, and thus it becomes possible to execute the fault diagnosis of the first NOx sensor 15 more accurately.

### [Third embodiment]

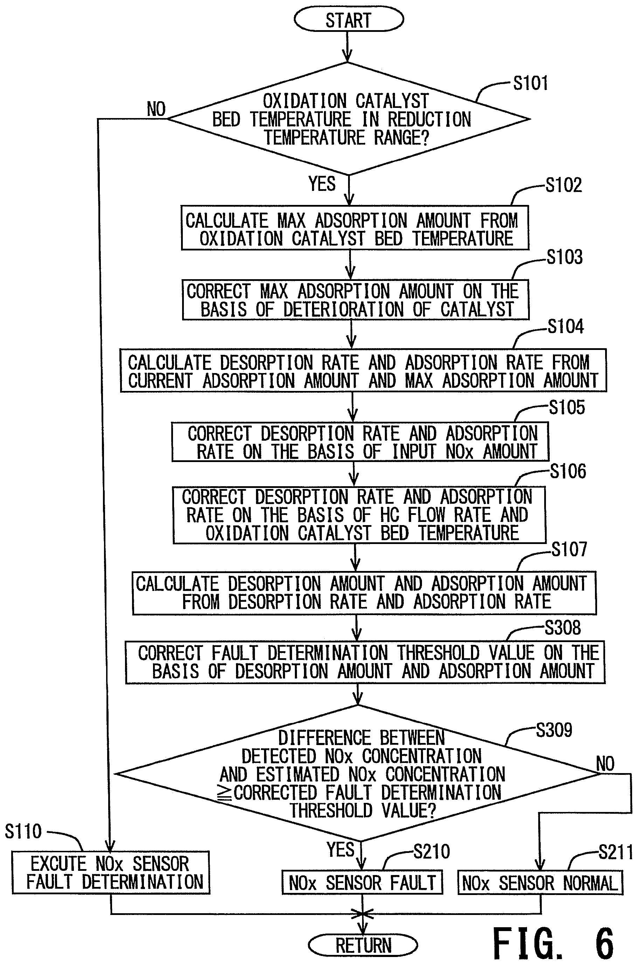

Next, a third embodiment of this invention will be described with reference to FIG. 6. FIG. 6 is a flowchart showing a flow of a fault diagnosis of the first NOx sensor 15 which is executed in the present embodiment. The present embodiment differs from the second embodiment described above in that when it is predicted that the NOx concentration in the exhaust gas might change due to the effects of the oxidation catalyst 13, then the fault determination threshold value is changed, instead of correcting the estimated value of the NOx concentration in the exhaust gas emitted from the internal combustion engine 10. More specifically, as shown in FIG. 6, the flow according to the present embodiment differs from the flow of the second embodiment described above, in that step S308 and step S309 are executed after step S107. Therefore, the configuration which is similar to that of the second embodiment described above is not explained further below.

When the desorption amount of the NOx desorbed from the oxidation catalyst 13 and the adsorption amount of the NOx adsorbed in the oxidation catalyst 13 have been calculated in step S107, then in step S308, the ECU 100 corrects the fault determination threshold value on the basis of the desorption amount and adsorption amount. In other words, since it is predicted that the NOx concentration in the exhaust gas flowing out from the oxidation catalyst 13 will change due to the effects of the oxidation catalyst 13, then the ECU 100 implements a correction such that the larger the calculated desorption amount is and the smaller the calculated adsorption amount is, the greater the fault determination threshold value becomes.

In step S309, the ECU 100 compares the detected value of the NOx concentration from the first NOx sensor 15 with the estimated value of the NOx concentration, and determines whether or not the difference between these two values is equal to or greater than the fault determination threshold value corrected in the previous step. If an affirmative judgment is made in this step, then this means that even if the change in the NOx concentration in the exhaust gas due to the effects of the oxidation catalyst 13 is factored in the fault determination threshold value, there is an excessive difference between the estimated value of the NOx concentration and the actual detected value. Therefore, the ECU 100 advances to step S210, determines that the first NOx sensor 15 is suffering a fault and terminates this flow.

On the other hand, if a negative judgment is made in step S309, then this means that if the change in the NOx concentration in the exhaust gas due to the effects of the oxidation catalyst 13 is factored in, then there is not an excessive difference between the estimated value of the NOx concentration and the actual detected value. Therefore, the ECU 100 advances to step S211, determines that the first NOx sensor 15 is operating properly and terminates this flow.

As described above, according to this embodiment, the change in the NOx concentration due to the effects of the oxidation catalyst 13 is reflected in the fault determination threshold value. Therefore, an execution of a fault determination by the ECU 100 is avoided, and thus it becomes possible to execute the fault diagnosis of the first NOx sensor 15 more accurately.

### REFERENCE SIGNS LIST

- 10: internal combustion engine
- 11: exhaust gas passage
- 13: oxidation catalyst
- 15: first NOx sensor
- 100: ECU
in that step S402 is executed instead of steps S102 to S108. Therefore, the configuration which is similar to that of the first embodiment described above is not explained further below.

If an affirmative judgment is made in step S101, then there is a possibility that the NOx concentration in the exhaust gas passing through the oxidation catalyst 13 might change excessively due to the effects of the oxidation catalyst 13. Therefore, in step S402, the ECU 100 obtains the HC flow rate flowing into the oxidation catalyst 13 and the bed temperature of the oxidation catalyst 13. Then the ECU 100 determines whether or not the obtained HC flow rate and bed temperature satisfy predetermined conditions. The predetermined conditions can be respective ranges of the hydrocarbon flow rate and the bed temperature of the oxidation catalyst 13 that make the NOx concentration in the exhaust gas passing through the oxidation catalyst 13 change to such an extent that there is a possibility of the ECU 100 making an erroneous determination. The ranges of the HC flow rate and the bed temperature are determined in advance by experimentation, simulation, or the like, in association with the state of operation of the internal combustion engine 10 and the current NOx adsorption amount in the oxidation catalyst 13.

If an affirmative judgment is made in step S402, then there is a possibility of an erroneous determination being made in the fault determination in this flow, and therefore the ECU 100 advances to step S109 and halts the execution of the fault determination of the first NOx sensor 15 in this flow. On the other hand, if a negative judgment is made in this step, then since there is little possibility of an erroneous determination being made in the fault determination in this flow, then the ECU 100 advances to step S110 and executes fault determination of the first NOx sensor 15.

According to the present embodiment, if there is a risk of the ECU 100 making an erroneous determination, it is possible to avoid the execution of a fault determination without executing the processes for obtaining the NOx adsorption rate and desorption rate of the oxidation catalyst 13. Consequently, it is possible to execute the fault diagnosis of the first NOx sensor 15 more accurately, while reducing the processing load on the ECU 100.

### REFERENCE SIGNS LIST

- 10: internal combustion engine
- 11: exhaust gas passage
- 13: oxidation catalyst
- 15: first NOx sensor
- 100: ECU

## Claims

1. An exhaust gas purification apparatus for an internal combustion engine (10), comprising:
an oxidation catalyst (13) suitable to be provided in an exhaust gas passage (11) of the internal combustion engine (10) and having an oxidation capability, the oxidation catalyst (13) exhibiting an action of adsorbing NOx in an exhaust gas flowing therein and an action of reducing NOx in the exhaust gas by using a hydrocarbon in the exhaust gas flowing therein as a reducing agent, when a temperature of the oxidation catalyst (13) is in a predetermined temperature range;
a NOx sensor (15) which is provided at a downstream side of the oxidation catalyst (13) for detecting a NOx concentration in the exhaust gas;
a fault determination unit for executing a fault determination of the NOx sensor (15) on the basis of a comparison between a detected value of the NOx concentration detected by the NOx sensor (15) and an estimated value of the NOx concentration in the exhaust gas at the position of the NOx sensor (15), and
an estimation unit;
**characterized in that** when the temperature of the oxidation catalyst (13) is in the predetermined temperature range,
- the estimation unit estimates an adsorption rate, which is an amount of NOx adsorbed to the oxidation catalyst (13) per unit time, and a desorption rate, which is an amount of NOx desorbed from the oxidation catalyst per unit time, on the basis of a hydrocarbon flow rate in the exhaust gas flowing into the oxidation catalyst (13) and the temperature of the oxidation catalyst (13), and
- the fault determination unit
-- halts the fault determination of the NOx sensor (15) when a net desorption amount of the NOx obtained from the adsorption rate and the desorption rate is equal to or greater than a predetermined amount, or
-- uses a corrected estimated value, which is the estimated value corrected on the basis of the adsorption rate and the desorption rate, instead of the estimated value to execute the fault determination of the NOx sensor (15).

2. The exhaust gas purification apparatus for an internal combustion engine (10) according to claim 1, wherein the estimation unit is so configured that, when the hydrocarbon flow rate is high, the estimation unit makes a lower estimate of the adsorption rate and makes a higher estimate of the desorption rate compared to when the hydrocarbon flow rate is low.

3. The exhaust gas purification apparatus for an internal combustion engine (10) according to claim 1 or 2, wherein the estimation unit is so configured that, when the temperature of the oxidation catalyst is low, the estimation unit makes a lower estimate of the adsorption rate and makes a higher estimate of the desorption rate compared to when the temperature of the oxidation catalyst is high.

4. An exhaust gas purification apparatus for an internal combustion engine (10), comprising:
an oxidation catalyst (13) suitable to be provided in an exhaust gas passage (11) of the internal combustion engine (10) and having an oxidation capability, the oxidation catalyst (13) exhibiting an action of adsorbing NOx in an exhaust gas flowing therein and an action of reducing NOx in the exhaust gas by using a hydrocarbon in the exhaust gas flowing therein as a reducing agent, when a temperature of the oxidation catalyst (13) is in a predetermined temperature range;
a NOx sensor (15) which is provided at a downstream side of the oxidation catalyst (13) for detecting a NOx concentration in the exhaust gas;
a fault determination unit for determining that the NOx sensor is suffering a fault when a difference between a detected value of the NOx concentration detected by the NOx sensor (15) and an estimated value of the NOx concentration in the exhaust gas at the position of the NOx sensor (15) is equal to or greater than a predetermined threshold value; and
an estimation unit;
**characterized in that** when the temperature of the oxidation catalyst is in the predetermined temperature range,
- the estimation unit estimates an adsorption rate, which is an amount of NOx adsorbed to the oxidation catalyst (13) per unit time, and a desorption rate, which is an amount of NOx desorbed from the oxidation catalyst per unit time, on the basis of a hydrocarbon flow rate in the exhaust gas flowing into the oxidation catalyst (13) and the temperature of the oxidation catalyst (13), and
- the fault determination unit corrects the threshold value on the basis of the adsorption rate and the desorption rate.

5. The exhaust gas purification apparatus for an internal combustion engine (10) according to claim 4, wherein the estimation unit is so configured that, when the hydrocarbon flow rate is high, the estimation unit makes a lower estimate of the adsorption rate and makes a higher estimate of the desorption rate compared to when the hydrocarbon flow rate is low.

6. The exhaust gas purification apparatus for an internal combustion engine (10) according to claim 4 or 5, wherein the estimation unit is so configured that, when the temperature of the oxidation catalyst is low, the estimation unit makes a lower estimate of the adsorption rate and makes a higher estimate of the desorption rate compared to when the temperature of the oxidation catalyst is high.

## Patentansprüche

1. Abgasreinigungsvorrichtung für einen Verbrennungsmotor (10), umfassend:
einen Oxidationskatalysator (13), der geeignet ist, in einem Abgaskanal (11) des Verbrennungsmotors (10) vorgesehen zu werden, und ein Oxidationsvermögen aufweist, wobei der Oxidationskatalysator (13) eine Wirkung zum Adsorbieren von NOx in einem darin strömenden Abgas und eine Wirkung zum Reduzieren von NOx in dem Abgas durch Verwendung eines Kohlenwasserstoffes als Reduktionsmittel in dem darin strömenden Abgas aufweist, wenn eine Temperatur des Oxidationskatalysators (13) ein einem vorgegebenen Temperaturbereich ist,
einen NOx-Sensor (15), der auf einer stromabwärtigen Seite des Oxidationskatalysators (13) vorgesehen ist, zum Detektieren einer NOx-Konzentration in dem Abgas,
eine Fehlerbestimmungseinheit zum Durchführen einer Fehlerbestimmung des NOx-Sensors (15) auf der Basis eines Vergleichs zwischen einem detektierten Wert der NOx-Konzentration, der durch den NOx-Sensor (15) detektiert wird, und einem geschätzten Wert der NOx-Konzentration in dem Abgas an der Position des NOx-Sensors (15) und
eine Schätzeinheit,
**dadurch gekennzeichnet, dass**, wenn die Temperatur des Oxidationskatalysators (13) in dem vorgegebenen Temperaturbereich ist,
- die Schätzeinheit eine Adsorptionsrate, die eine Menge von NOx ist, die pro Zeiteinheit an den Oxidationskatalysator (13) adsorbiert wird, und eine Desorptionsrate, die eine Menge von NOx ist, die pro Zeiteinheit von dem Oxidationskatalysator desorbiert wird, auf der Basis einer Kohlenwasserstoffströmungsrate in dem Abgas, das in den Oxidationskatalysator (13) strömt, und der Temperatur des Oxidationskatalysators (13) schätzt und
- die Fehlerbestimmungseinheit
-- die Fehlerbestimmung des NOx-Sensors (15) stoppt, wenn eine Nettodesorptionsmenge des NOx, die aus der Adsorptionsrate und der Desorptionsrate erhalten wird, größer gleich einer vorgegebenen Menge ist, oder
-- einen korrigierten Schätzwert, welcher der Schätzwert ist, der auf der Basis der Adsorptionsrate und der Desorptionsrate korrigiert wird, an Stelle des Schätzwerts verwendet, um die Fehlerbestimmung des NOx-Sensors (15) durchzuführen.

2. Abgasreinigungsvorrichtung für einen Verbrennungsmotor (10) nach Anspruch 1, wobei die Schätzeinheit derart ausgebildet ist, dass, wenn die Kohlenwasserstoffströmungsrate hoch ist, die Schätzeinheit eine verglichen damit, wenn die Kohlenwasserstoffströmungsrate niedrig ist, niedrigere Schätzung der Adsorptionsrate macht und eine höhere Schätzung der Desorptionsrate macht.

3. Abgasreinigungsvorrichtung für einen Verbrennungsmotor (10) nach Anspruch 1 oder 2, wobei die Schätzeinheit derart ausgebildet ist, dass, wenn die Temperatur des Oxidationskatalysators niedrig ist, die Schätzeinheit eine verglichen damit, wenn die Temperatur des Oxidationskatalysators hoch ist, niedrigere Schätzung der Adsorptionsrate macht und eine höhere Schätzung der Desorptionsrate macht.

4. Abgasreinigungsvorrichtung für einen Verbrennungsmotor (10), umfassend:
einen Oxidationskatalysator (13), der geeignet ist, in einem Abgaskanal (11) des Verbrennungsmotors (10) vorgesehen zu werden, und ein Oxidationsvermögen aufweist, wobei der Oxidationskatalysator (13) eine Wirkung zum Adsorbieren von NOx in einem darin strömenden Abgas und eine Wirkung zum Reduzieren von NOx in dem Abgas durch Verwendung eines Kohlenwasserstoffes als Reduktionsmittel in dem darin strömenden Abgas aufweist, wenn eine Temperatur des Oxidationskatalysators (13) ein einem vorgegebenen Temperaturbereich ist,
einen NOx-Sensor (15), der auf einer stromabwärtigen Seite des Oxidationskatalysators (13) vorgesehen ist, zum Detektieren einer NOx-Konzentration in dem Abgas,
eine Fehlerbestimmungseinheit zum Bestimmen, dass an dem NOx-Sensor ein Fehler vorliegt, wenn eine Differenz zwischen einem detektierten Wert der NOx-Konzentration, der durch den NOx-Sensor (15) detektiert wird, und einem geschätzten Wert der NOx-Konzentration in dem Abgas an der Position des NOx-Sensors (15) größer gleich einem vorgegebenen Schwellenwert ist, und
eine Schätzeinheit,
**dadurch gekennzeichnet, dass**, wenn die Temperatur des Oxidationskatalysators in dem vorgegebenen Temperaturbereich ist,
- die Schätzeinheit eine Adsorptionsrate, die eine Menge von NOx ist, die pro Zeiteinheit an den Oxidationskatalyator (13) adsorbiert wird, und eine Desorptionsrate, die eine Menge von NOx ist, die pro Zeiteinheit von dem Oxidationskatalysator desorbiert wird, auf der Basis einer
Kohlenwasserstoffströmungsrate in dem Abgas, das in den Oxidationskatalysator (13) strömt, und der Temperatur des Oxidationskatalysators (13) schätzt und
- die Fehlerbestimmungseinheit den Schwellenwert auf der Basis der Adsorptionsrate und der Desorptionsrate korrigiert.

5. Abgasreinigungsvorrichtung für einen Verbrennungsmotor (10) nach Anspruch 4, wobei die Schätzeinheit derart ausgebildet ist, dass, wenn die Kohlenwasserstoffströmungsrate hoch ist, die Schätzeinheit eine verglichen damit, wenn die Kohlenwasserstoffströmungsrate niedrig ist, niedrigere Schätzung der Adsorptionsrate macht und eine höhere Schätzung der Desorptionsrate macht.

6. Abgasreinigungsvorrichtung für einen Verbrennungsmotor (10) nach Anspruch 4 oder 5, wobei die Schätzeinheit derart ausgebildet ist, dass, wenn die Temperatur des Oxidationskatalysators niedrig ist, die Schätzeinheit eine verglichen damit, wenn die Temperatur des Oxidationskatalysators hoch ist, niedrigere Schätzung der Adsorptionsrate macht und eine höhere Schätzung der Desorptionsrate macht.

## Revendications

1. Appareil de purification de gaz d'échappement pour un moteur à combustion interne (10), comportant :
un catalyseur d'oxydation (13) approprié pour être prévu dans un passage de gaz d'échappement (11) du moteur à combustion interne (10) et ayant une capacité d'oxydation, le catalyseur d'oxydation (13) présentant une action d'adsorption du NOx dans un gaz d'échappement s'écoulant dedans et une action de réduction du NOx dans le gaz d'échappement en utilisant un hydrocarbure dans le gaz d'échappement s'écoulant dedans comme agent de réduction, quand une température du catalyseur d'oxydation (13) est dans une plage de températures prédéterminée ;
un capteur de NOx (15) qui est prévu sur un côté aval du catalyseur d'oxydation (13) pour détecter une concentration en NOx dans le gaz d'échappement ;
une unité de détermination de défaut pour exécuter une détermination de défaut du capteur de NOx (15) sur la base d'une comparaison entre une valeur détectée de la concentration en NOx détectée par le capteur de NOx (15) et une valeur estimée de la concentration en NOx dans le gaz d'échappement au niveau de la position du capteur de NOx (15), et
une unité d'estimation ;
**caractérisé en ce que**, quand la température du catalyseur d'oxydation (13) est dans la plage de températures prédéterminée,
- l'unité d'estimation estime un taux d'adsorption, qui est une quantité de NOx adsorbée sur le catalyseur d'oxydation (13) par unité de temps, et un taux de désorption, qui est une quantité de NOx désorbée du catalyseur d'oxydation par unité de temps, sur la base d'un débit d'hydrocarbure dans le gaz d'échappement s'écoulant dans le catalyseur d'oxydation (13) et de la température du catalyseur d'oxydation (13), et
- l'unité de détermination de défaut
-- arrête la détermination de défaut du capteur de NOx (15) quand une quantité nette de désorption du NOx obtenue à partir du taux d'adsorption et du taux de désorption est égale ou supérieure à une quantité prédéterminée, ou
-- utilise une valeur estimée corrigée, qui est la valeur estimée corrigée sur la base du taux d'adsorption et du taux de désorption, à la place de la valeur estimée pour exécuter la détermination de défaut du capteur de NOx (15).

2. Appareil de purification de gaz d'échappement pour un moteur à combustion interne (10) selon la revendication 1, dans lequel l'unité d'estimation est configurée de telle sorte que, quand le débit d'hydrocarbure est élevé, l'unité d'estimation réalise une estimation plus faible du taux d'adsorption et réalise une estimation plus élevée du taux de désorption, que quand le débit d'hydrocarbure est faible.

3. Appareil de purification de gaz d'échappement pour un moteur à combustion interne (10) selon la revendication 1 ou 2, dans lequel l'unité d'estimation est configurée de telle sorte que, quand la température du catalyseur d'oxydation est basse, l'unité d'estimation réalise une estimation plus faible du taux d'adsorption et réalise une estimation plus élevée du taux de désorption, que quand la température du catalyseur d'oxydation est élevée.

4. Appareil de purification de gaz d'échappement pour un moteur à combustion interne (10), comportant :
un catalyseur d'oxydation (13) approprié pour être prévu dans un passage de gaz d'échappement (11) du moteur à combustion interne (10) et ayant une capacité d'oxydation, le catalyseur d'oxydation (13) présentant une action d'adsorption du NOx dans un gaz d'échappement s'écoulant dedans et une action de réduction du NOx dans le gaz d'échappement en utilisant un hydrocarbure dans le gaz d'échappement s'écoulant dedans comme agent de réduction, quand une température du catalyseur d'oxydation (13) est dans une plage de températures prédéterminée ;
un capteur de NOx (15) qui est prévu sur un côté aval du catalyseur d'oxydation (13) pour détecter une concentration en NOx dans le gaz d'échappement ;
une unité de détermination de défaut destinée à déterminer que le capteur de NOx souffre d'un défaut quand une différence entre une valeur détectée de la concentration en NOx détectée par le capteur de NOx (15) et une valeur estimée de la concentration en NOx dans le gaz d'échappement au niveau de la position du capteur de NOx (15) est égale ou supérieure à une valeur de seuil prédéterminée ; et
une unité d'estimation ;
**caractérisé en ce que**, quand la température du catalyseur d'oxydation (13) est dans la plage de températures prédéterminée,
- l'unité d'estimation estime un taux d'adsorption, qui est une quantité de NOx adsorbée sur le catalyseur d'oxydation (13) par unité de temps, et un taux de désorption, qui est une quantité de NOx désorbée du catalyseur d'oxydation par unité de temps, sur la base d'un débit d'hydrocarbure dans le gaz d'échappement s'écoulant dans le catalyseur d'oxydation (13) et de la température du catalyseur d'oxydation (13), et
- l'unité de détermination de défaut corrige la valeur de seuil sur la base du taux d'adsorption et du taux de désorption.

5. Appareil de purification de gaz d'échappement pour un moteur à combustion interne (10) selon la revendication 4, dans lequel l'unité d'estimation est configurée de telle sorte que, quand le débit d'hydrocarbure est grand, l'unité d'estimation réalise une estimation plus faible du taux d'adsorption et réalise une estimation plus élevée du taux de désorption, que quand le débit d'hydrocarbure est faible.

6. Appareil de purification de gaz d'échappement pour un moteur à combustion interne (10) selon la revendication 4 ou 5, dans lequel l'unité d'estimation est configurée de telle sorte que, quand la température du catalyseur d'oxydation est basse, l'unité d'estimation réalise une estimation plus faible du taux d'adsorption et réalise une estimation plus élevée du taux de désorption, que quand la température du catalyseur d'oxydation est haute.
